# EUROPÄISCHE PATENTSCHRIFT

(11) **EP 1 250 373 B1**
(45) Veröffentlichungstag und Bekanntmachung des Hinweises auf die Patenterteilung: **21.12.2005**
(21) Anmeldenummer: 01902350.6
(22) Anmeldetag: 25.01.2001
(51) Int. Cl.: C08G 18/83, C08K 3/22, C08L 75/04, C08J 9/00

(54) **MODIFIZIERTE POLYURETHANSCHAUMSTOFFE ALS ADSORBENTIEN**
MODIFIED POLYURETHANE FOAMED MATERIALS USED AS ADSORBENTS
MOUSSES POLYURETHANE MODIFIEES UTILISEES COMME ADSORBANTS

(30) Priorität: 26.01.2000 DE 10003156; 12.10.2000 DE 10050418
(43) Veröffentlichungstag der Anmeldung: 23.10.2002
(73) Patentinhaber: BASF Aktiengesellschaft, 67056 Ludwigshafen (DE)
(72) Erfinder: BECKER, Armin, 67259 Grossniedesheim (DE); BRUCHMANN, Bernd, 67251 Freinsheim (DE); ARLT, Andreas, 49457 Drebber (DE); TREULING, Ulrich, 64625 Bensheim (DE); RAHM, Rainer, 67071 Ludwigshafen (DE); DECKER, Jürgen, 67346 Speyer (DE); STEUERLE, Ulrich, 69124 Heidelberg (DE); KREYENSCHMIDT, Martin, 49393 Lohne (DE); RIEGEL, Willi, 68753 Waghäusel (DE); BERTLEFF, Werner, 68519 Viernheim (DE)
(86) Internationale Anmeldenummer: PCT/EP2001/000791
(87) Internationale Veröffentlichungsnummer: WO 2001/055242

(56) Entgegenhaltungen:
- WO-A-94/00237
- DATABASE WPI Section Ch, Week 199109 Derwent Publications Ltd., London, GB; Class A25, AN 1991-061442 XP002168396 & JP 03 009950 A (NIPPON KAYAKU KK), 17. Januar 1991 (1991-01-17) in der Anmeldung erwähnt

## Beschreibung

Die Erfindung betrifft Polyurethanschaumstoffe, beispielsweise Weich-, Halbhart- oder Hartschaumstoffe, bevorzugt offenzellige Schaumstoffe, enthaltend (i) Ethylenimin, Polyethylenimin, Polyvinylamin, Polyvinylamin-Copolymere, carboxymethylierte Polyethylenimine, phosphonomethylierte Polyethylenimine, quarternisierte Polyethylenimine und/oder dithiocarbamatisierte Polyethylenimine, oder (ii) Alkali- oder Erdalkalihydroxide, deren Verwendung und Verfahren zu ihrer Herstellung.

Die Herstellung von Polyurethanschaumstoffen, im folgenden auch als PUR-Schaumstoffe bezeichnet, durch Umsetzung von Polyisocyanaten mit Verbindungen mit mindestens zwei reaktiven Wasserstoffatomen ist seit langem bekannt und wurde vielfach beschrieben.

Aufgrund der vorteilhaften Eigenschaften von PUR-Schaumstoffen beispielsweise hinsichtlich ihres geringen Abriebs und ihrer Chemikalienbeständigkeit eignen sich diese Schaumstoffe prinzipiell hervorragend als Trägermaterialien für Wirkstoffe. Die Trägerung von Wirkstoffen auf Polymeren bietet sowohl für physikalische als auch chemische Prozesse gegenüber ungeträgerten Verfahren die Vorteile heterogener Reaktionen. Dazu gehören beispielsweise die leichte Entfernung und Rückgewinnung von Verbindungen, z.B. durch einfache Filtration oder Regeneration, das Recycling und die Möglichkeit zur Verwendung in kontinuierlichen Flussverfahren sowie die hohe Wirksamkeit, bedingt durch die große Oberfläche des Trägermaterials.

So beschreibt WO 95/18159 die Herstellung eines Ionenaustauschermaterials auf der Basis eines Polyurethanschaumes, wobei das Ionenaustauschermaterial entweder bereits den Ausgangssubstanzen zur Herstellung der Schaumstoffes zugegeben wird oder nachträglich auf dem Schaumstoff polymerisiert wird. Als Ionenaustauschermaterial werden eine Vielzahl von Polymeren aufgeführt, unter anderem Polystyrol-polyethylenimin. Die Verwendung eines Polystyrol-polyethylenimin ist aus zwei Gründen nachteilig. Zum Einen muß das Polyethylenimin erst in einem zusätzlichen Arbeitsschritt an das Polystyrol gebunden werden. Zum Anderen ist die effektiv eingebrachte Wirkstoffmenge durch das nicht als Wirkstoff geeignete Polystyrol geringer, als bei einem direktem Einsatz von Polyethylenimin.

Bei Geruchsstoffen handelt es sich meistens um organische Substanzgemische, die bereits in außerordentlich geringen Konzentrationen zu beträchtlichen Geruchsbelästigungen führen. Zur Abtrennung dieser Geruchsstoffe stehen eine Vielzahl von Sorbentien zur Verfügung, beispielsweise können Aktivkohlen, Silicagele, Tonerden oder Molekularsiebe verwendet werden. Im allgemeinen werden diese Sorbentien auf polymeren Gerüstsubstanzen wie beispielsweise Schaumstoffen geträgert.

JP 03009950 beschreibt einen desodorierenden Polyurethanschaumstoff, der eine Vielzahl von Geruchsstoffen bindet. Als desodorierende Komponenten werden bspw. Verbindungen auf Basis Phosphorsäure, Phoshoriger Säure, Hypophosphoriger Säure, Salzsäure und deren Salze (Erdalkali- und Alkalimetallsalze) verwendet. Zusätzlich werden die Wirkstoffe bevorzugt auf einen Träger (Silica oder Alumina) aufgebracht.

US 4,877,816 beschreibt ein Schaumtuch das feine Partikel eines Desodorants und eines Desinfektionsmittels enthält. Als Desodorant wird Zinkcarbonat oder Eisensulfat beschrieben, als Desinfektionsmittel ein Phthalimid. Bevorzugt wird ein Polyurethanschaumstoff verwendet.

JP 49131986 offenbart Polyurethanschaumstoffe, die mit einer Lösung oder Suspension von metallischen Verbindungen imprägniert werden. Anschließend werden diese Verbindungen mit alkalischen, oxidierenden oder reduzierenden Verbindungen behandelt, um auf dem Schaumstoff Metalle, Metalloxide oder Metallkomplexe herzustellen. Die Schaumstoffe können zur Geruchsadsorption eingesetzt werden.

JP 09057050 beschreibt einen desodorierenden Filter aus einem Polyurethanschaumstoff, der einen Wirkstoff, bspw. Aktivkohle, ein Ionenaustauscherharz, oder einen Katalysator enthält.

Aufgabe der vorliegenden Erfindung war es, Polymere mit hervorragenden Adsorptionsfähigkeiten für verschiedene Verbindungen, insbesondere für Schwermetallionen und Farbstoffe zu entwickeln. Außerdem sollten die hergestellten Schaumstoffe auch zur Adsorption von anionischen Schwermetallkomplexen, Anionen organischen Molekülen (bspw.: Aldehyde oder Säuren) und zur Reinigung des Abwassers der Papierherstellung geeignet sein.

Ferner war es Aufgabe der vorliegenden Erfindung, einen Schaumstoff zu entwickeln, der Geruchsstoffe zuverlässig und schnell abreichert, bevorzugt ohne dabei von dem geruchsstoffhaltigen Gas durchströmt zu werden.

Die Aufgabe der vorliegenden Erfindung konnte durch Polyurethanschaumstoffe gelöst werden, welche die Verbindungen (i) und/oder (ii) enthalten.

Gegenstand der Erfindung sind daher Polyurethanschaumstoffe, enthaltend
(i) Ethylenimin, Polyethylenimin, Polyvinylamin, Polyvinylamin-Copolymere, carboxymethylierte Polyethylenimine, phosphonomethylierte Polyethylenimine, quarternisierte Polyethylenimine und/oder dithiocarbamatisierte Polyethylenimine oder
(ii)Alkali- und/oder Erdalkalihydroxide oder
ein Gemisch aus (i) und (ii).

Ein weiterer Gegenstand der Erfindung ist ein Verfahren zur Herstellung der erfindungsgemäßen Polyurethanschaumstoffe und deren Verwendung zur Adsorption von Geruchsstoffen und zur Herstellung von Formkörpern.

Als Verbindungen (i) werden erfindungsgemäß Ethylenimin, Polyethylenimin, Polyvinylamin, Polyvinylamin-Copolymere, carboxymethylierte Polyethylenimine, phosphonomethylierte Polyethylenimine, quarternisierte Polyethylenimine und/oder dithiocarbamatisierte Polyethylenimine eingesetzt.

Beispielsweise kommen in Betracht: Ethylenimin, Polyethylenimine mit einem mittleren Molekulargewicht von 500 bis 800.000 g/mol, carboxymethylierte Polyethylenimine mit einem mittleren Molekulargewicht von 1000 bis 100.000 g/mol, phosphonomethylierte Polyethylenimine mit einem mittleren Molekulargewicht von 1000 bis 100.000 g/mol, quarternisierte Polyethylenimine mit mittleren Molekulargewicht von 1000 bis 250.000 g/mol, dithiocarbamatisierte Polyethylenimine mit einem mittleren Molekulargewicht von 1000 bis 250.000 g/mol, Polyvinylamine mit einem mittleren Molekulargewicht von 1000 bis 150.0000 g/mol, Polyvinylamin-Copolymere mit einem mittleren Molekulargewicht von 1000 bis 250.0000 g/mol. Alle Angaben beziehen sich hierbei auf das zahlenmittlere Molekulargewicht.

Bevorzugt sind als (i) Polyethylenimin und/oder Polyvinylamin.

Als erfindungsgemäße Alkali- oder Erdalkalihydroxide (ii) werden Natriumhydroxid und Kaliumhydroxid bevorzugt.

Neben der Adsorption von Schwermetallionen und Geruchsstoffen sind die hergestellten Schaumstoffe auch zur Adsorption von Farbstoffen, anionischen Schwermetallkomplexen oder Anionen geeignet. Zusätzlich können die Schaumstoffe zur Adsorption organischer Moleküle (bspw.: Aldehyde), zur Reinigung des Abwassers der Papierherstellung, oder zur Fixierung sauerer Gase eingesetzt werden.

Die Herstellung der erfindungsgemäßen Polyurethanschaumstoffe erfolgt durch Umsetzung von Polyisocyanaten mit. Verbindungen mit mindestens zwei mit Isocyanaten reaktiven Wasserstoffatomen, wobei die Verbindungen (i) oder (ii) auf die Oberfläche des Schaumstoffs aufgebracht werden. Die Verbindungen (i) und (ii) können durch zwei bevorzugte Verfahren auf dem Polyurethanschaumstoff aufgebracht werden.

Zum einen kann die Herstellung des Polyurethanschaumstoffs durch Umsetzung von Polyisocyanaten mit Verbindungen mit mindestens zwei mit Isocyanaten reaktiven Wasserstoffatomen in Gegenwart von (i) oder (ii) durchführt werden. Aus den Verbindungen (i) können aber auch durch Reaktion mit Isocyanat Prepolymeren hergestellt werden. Darunter versteht man Umsetzungsprodukte von Verbindungen (i) und Polyisocyanaten, die am Kettenende bevorzugt freie Isocyanatgruppen aufweisen. Die Prepolymeren und Quasiprepolymeren und ihre Herstellung sind allgemein bekannt.

Zum anderen kann man den Polyurethanschaumstoff nach seiner Herstellung mit Lösungen von den Verbindungen (i) oder (ii) tränken. Durch das Tränken des Schaumstoffes mit der flüssigen Verbindung (i) bzw. einer Lösung der festen oder flüssigen Verbindung (i) oder (ii) in einem geeigneten Lösemittel wird (i) oder (ii) auf dem Schaumstoff imprägniert. Als Lösemittel eignen sich protische Lösemittel, beispielsweise Wasser, Aceton, Ethanol, i-Propanol, Methylethylketon oder Halogenalkane wie 1,2-Dichlormethan. Aus den mit Verbindung (i) oder (ii) getränkten Schaumstoffen kann anschließend das Lösemittel entfernt werden. Dies kann geschehen durch Anlegen eines Vakuums oder durch Trocknen bei Temperaturen bis max. 50°C. Durch Temperaturbehandlung bei Temperaturen zwischen 50 und 150°C über einen Zeitraum von 4 bis 72 Stunden können die Verbindungen (i) auf den Schaumstoff aufreagieren und damit kovalent angebunden werden.

Weiterhin kann die Trägerung der Verbindungen (i) oder (ii) beispielsweise durch Aufsprühen erfolgen. Das Lösemittel muß in diesem Fall noch entfernt werden. Dies kann beispielsweise durch das Anlegen von Vakuum und/oder Temperatur erfolgen.

Bei einer nachträglichen Tränkung der Schaumstoffe mit einer Lösung der Verbindungen (i) oder (ii) ist die Aufnahmekapazität des Schaumstoffes auch von der Art und Polarität des Lösemittels abhängig, in dem der Wirkstoff gelöst wurde. Speziell die Verwendung von Aceton als bevorzugtem Lösungsmittel für die Verbindungen (i) erhöht die Kapazität des Schaumstoffes für (i). Für die Verbindungen (ii) wird bevorzugt Alkohol, wie z.B. Ethanol, verwendet.

Die durch Tränken auf den Schaumstoff aufgebrachten Verbindungen (i) oder (ii) können gegebenenfalls in einem weiteren Schritt auf dem Schaumstoff vernetzt werden. Geeignete Vernetzer sind allgemein bekannt, beispielsweise sind nichtflüchtige PEG-bisglycidylether oder Polycarbonsäuren, wie beispielsweise Tetracarbonsäure geeignet. Die zur Vernetzung benötigten Temperaturen liegen für die Ether bei 80°C für die Polycarbonsäuren bei 120 bis 130°C.

Zu einer besseren Fixierung der Verbindung (i) kann der Schaumstoff mit einem Isocyanatüberschuss hergestellt werden - in diesem Fall kann die Verbindung (i) über verbleibende Isocyantgruppen am Schaumgerüst fixiert werden.

Die erfindungsgemäßen Polyurethanschaumstoffe weisen bevorzugt einen Gehalt an (i) oder (ii) oder Gemischen aus (i) und (ii) von 0,1 bis 80 Gew.-%, bevorzugt 20 bis 70 Gew.-%, besonders bevorzugt 25 bis 60 Gew.-%, bezogen auf das Gewicht des Schaumstoffs, auf.

Die erfindungsgemäßen Polyurethanschaumstoffe finden bevorzugt Anwendung bei der Adsorption von Geruchsstoffen und von Schwermetallionen und Farbstoffen aus Flüssigkeiten. Allerdings können die Schaumstoffe auch zur Adsorption von anionischen Schwermetallkomplexen, Anionen, saueren Verbindungen und organischen Substanzen wie bspw. Formaldehyd eingesetzt werden. Die Schaumstoffe können ebenfalls zur Reinigung des Abwassers der Papierherstellung eingesetzt werden. Die Schaumstoffe können ebenfalls zur Gaswäsche bspw. als Ozonfilter in PKWs eingesetzt werden.

Die Schadstoffe, insbesondere Schwermetallionen und Farbstoffe, die durch die erfindungsgemäßen Polyurethanschaumstoffe bevorzugt adsorbiert werden können, ergeben sich aus der Wahl des geträgerten Komplexbildners. Einige Schwermetalle (besonders Quecksilber und Blei) werden auch von dem Polyurethanschaumstoff adsorbiert, dadurch entsteht eine zusätzliche Verstärkung der Abreicherung. Durch die geträgerten Wirkstoffe werden insbesondere Kupfer, Nickel, Cobalt, Cadmium, Quecksilber, Blei, Chrom, Mangan, Eisen, Rhenium, Silber, Zink adsorbiert.

Als Flüssigkeiten, aus denen die Schadstoffe adsorbiert werden können, sind prinzipiell alle Flüssigkeiten geeignet, in denen diese löslich sind, und die die Polyurethanschaummatrix nicht zerstören. Insbesondere geeignet sind Wasser, gegebenenfalls polare, wassermischbare organische Lösungsmittel sowie beliebige Mischungen der genannten Verbindungen. Bei wäßrigen Lösungen sollte der Anteil an organischen Lösungsmitteln bevorzugt nicht höher als 30 Gew.-%, bezogen auf das Gewicht der Lösung, betragen, da ansonsten bei der Adsorption eine partielle Entmischung auftreten kann, die zu Störungen bei der Adsorption führt.

Bevorzugt wird die Schadstoffe enthaltende Flüssigkeit mit dem erfindungsgemäßen Polyurethanschaumstoff enthaltend (i) in Kontakt gebracht. Der Polyurethanschaumstoff kann dabei als geometrischer Formkörper, z.B. als Würfel oder Kugeln, oder in geflockter Form in die Flüssigkeit eingebracht, in dieser gerührt und nach der Adsorption wieder entfernt werden, beispielsweise mittels Filtration. In einer weiteren Ausführungsform der Erfindung kann der Polyurethanschaumstoff beispielsweise in einem Rohr oder einer Kartusche fixiert und die Flüssigkeit durch diesen fixierten Schaum geleitet werden. Die Fixierung des Schaumes kann beispielsweise als Festbett in einer Austauschersäule erfolgen. Als günstig hat es sich erwiesen, den zerkleinerten Schaum als Filterbett anzubringen und die Austauschlösung über dieses Filter zu leiten.

Gut geeignet für das erfindungsgemäße Verfahren sind geflockte Schaumstoffe, da hier die zugängliche Oberfläche besonders hoch ist.

Die Adsorption sollte vorzugsweise bei einem pH-Wert im Bereich zwischen 2 bis 12, vorzugsweise von 4 bis 10 stattfinden. Die Einstellung des pH-Wertes kann dabei mittels Pufferlösungen vorgenommen werden. Bei einem Ausfall von Metallhydroxiden können diese ebenfalls an den Schaumstoff physisorbiert werden und damit abgetrennt werden. Als Puffer können bekannte Pufferlösungen für diesen pH-Bereich gewählt werden, wie z.B. ein Citrat-Puffer oder ein Phosphat-Puffer.

Nachdem sich die Austauschkapazität der erfindungsgemäß eingesetzten Polyurethanschaumstoffe erschöpft hat, kann gegebenenfalls durch Säuren oder Komplexbildner eine Extraktion erreicht werden. Der funktionalisierte Schaumstoff kann nach der Regeneration erneut eingesetzt werden.

Ist eine Regenerierung des Schaumstoffs nicht oder nur schwer möglich, so kann dieser kostengünstig thermisch verwertet werden. Die entsprechenden Metalle können gegebenenfalls als Legierungsbestandteil in Hochofenmetallen enthalten sein.

Durch die Adsorption radioaktiver Verbindungen, Atome oder Ionen kann eine Sammlung der strahlenden Bestandteile erfolgen. Die dadurch erreichte Volumenaufkonzentration ist von hohem ökonomischen Vorteil. Die so belasteten PUR-Schaumstoffe können dann gegebenenfalls einbetoniert oder dauerhaft versiegelt werden. Danach ist eine Endlagerung möglich.

Die erfindungsgemäßen Polyurethanschaumstoffe können, insbesondere zur Adsorption von Geruchsstoffen auch in Form von Schaumpads, eingesetzt werden. Ferner können sie zur Herstellung von Formartikeln und Gebrauchsgegenständen verwendet werden. Beispiele dafür sind unter anderem Schuhsohlen, Kleiderbügel und Polsterungen für Bekleidung. Die Herstellung dieser Formartikel umfaßt auch das Hinterschäumen von Gegenständen, wie beispielsweise Kleiderbügel, Schranktüren oder Armaturen in Fahrzeugen.

Die erfindungsgemäß eingesetzten Adsorberschäume sind vorzugsweise in einem Temperaturbereich von >0°C bis 110°C einsetzbar, wobei bei Temperaturen >90°C nur eine begrenzte Standzeit zu erwarten ist.

Die erfindungsgemäßen Polyurethanschaumstoffe sind vorzugsweise offenzellig, um eine möglichst große Oberfläche für den Kontakt zwischen den Verbindungen (i) und/oder (ii) und den zu adsorbierenden Stoffen zu gewährleisten.

Weiterhin ist es vorteilhaft, die Polyurethanschaumstoffe, insbesondere solche, die Verbindungen (i) enthalten, hydrophil einzustellen, dadurch wird eine optimale Benetzung des Schaumstoffs mit einer Flüssigkeit, welche zu adsorbierende Schadstoffe enthält, ermöglicht. Die Hydrophilie der Polyurethan-Schaumstoffe kann beispielsweise durch die Verwendung von Polyetherolen mit einem hohen Gehalt an Ethylenoxid in der Kette erhöht werden.

Die nach dem erfindungsgemäßen Verfahren hergestellten Polyurethanschaumstoffe weisen vorzugsweise eine Dichte von 10 bis 800 kg/m³, besonders bevorzugt von 20 bis 700 kg/m³ und insbesondere von 40 bis 60 kg/m³ auf.

Zur Herstellung der erfindungsgemäßen Polyurethane werden die Isocyanate in üblicher Weise mit den Verbindungen mit mindestens zwei aktiven Wasserstoffatomen in Gegenwart von Treibmitteln sowie gegebenenfalls Katalysatoren und/oder Hilfsmittel und/oder Zusatzstoffe zur Reaktion gebracht. Hierbei werden die Verbindungen mit mindestens zwei mit Isocyanatgruppen reaktiven Wasserstoffatomen sowie die nachstehend genannten Treibmittel, Katalysatoren und Hilfs- und/oder Zusatzstoffe häufig vor der Umsetzung zu einer sogenannten.Polyolkomponente vereinigt und diese mit der Isocyanatkomponente zusammengebracht.

Zu den für die Durchführung des erfindungsgemäßen Verfahrens möglichen Einsatzprodukten, d.h. den Isocyanaten, den Verbindung mit mindestens zwei aktiven Wasserstoffatomen, den Treibmitteln sowie gegebenenfalls den Katalysatoren und/oder den Hilfs- und/oder Zusatzstoffen ist im einzelnen folgendes zu sagen:

Als Isocyanate, bevorzugt Polyisocyanate, besonders bevorzugt Diisocyanate, bevorzugt organische Diisocyanate können die üblichen und bekannten (cyclo)aliphatischen und aromatischen Polyisocyanate eingesetzt werden. Beispiele für aromatische Polyisocyanate sind 2,4- und 2,6-Toluylendiisocyanat (TDI), 4,4'-, 2,4'- und 2,2'-Diphenylmethan-diisocyanat (MDI), Polyphenylenpolymethylen-polyisocyanate (Roh-MDI), 1,5-Naphthylendiisocyanät.

Beispiele für (cyclo)aliphatische Di- oder Tri-isocyanate sind Tetramethylendiisocyanat-1,4, Hexamethylendiisocyanat-1,6, Isophorondiisocyanat, 2-Methyl-pentamethylendiisocyanat, 2,2,4- oder 2,4,4-Trimethyl-1,6-hexamethylen-diisocyanat, 2-Butyl-2-ethylpentamethylendiisocyanat, 1,4-Diisocyanatocyclohexan, 3-Isocyanatomethyl-1-methyl-1-isoeyanatocyclohexan, Isocyanatopropylcyclohexylisocyanat, Xylylendiisocyanat, Tetramethylxylylendiisocyanat, Bis-(4-isocyanatocyclohexyl)-methan, Lysinesterisocyanate, 1,3- oder 1,4-Bis(isocyanatomethyl)cyclohexan, 4-Isocyanatomethyl-1,8-octamethylendiisocyanat sowie deren Mischungen oder die daraus hergestellten Oligo- oder Polyisocyanate.

Die Oligo- oder Polyisocyanate lassen sich herstellen aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen.

Die genannten Isocyanate können auch modifiziert sein, beispielsweise durch Einbau von Carbodiimidgruppen. Häufig werden die Polyisocyanate auch in Form von Prepolymeren eingesetzt. Dabei handelt es sich um Umsetzungsprodukte der genannten Polyisocyanate mit Polyolkomponenten. Zumeist werden sogenannte Isocyanatprepolymere verwendet, das heißt solche Umsetzungsprodukte von Polyolen und Polyisocyanaten, die am Kettenende freie Isocyanatgruppen aufweisen. Die Prepolymeren und Quasiprepolymeren und ihre Herstellung sind allgemein bekannt und vielfach beschrieben. Für das erfindungsgemäße Verfahren werden insbesondere Prepolymere mit einem NCO-Gehalt im Bereich von 25 bis 3,5 Gew.-% eingesetzt.

In einer bevorzugten Ausführungsform des erfindungsgemäßen Verfahrens werden als Isocyanatkomponente MDI und/oder Roh-MDI sowie Biurete, Isocyanurate, sowie Allophanate auf Basis aliphatische Isocyanate eingesetzt.

Als Verbindung mit mindestens zwei aktiven Wasserstoffatomen werden vorzugsweise Polyesteralkohole und besonders bevorzugt Polyetherole mit einer Funktionalität von 2 bis 8, insbesondere von 2 bis 4, vorzugsweise 2 bis 3 und einem mittleren Molekulargewicht im Bereich von 1000 bis 8500 g/mol, vorzugsweise 1000 bis 6000 eingesetzt. Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel dienen vorzugsweise 2- und 3-funktionelle Alkohole mit Molekulargewichten kleiner 1000 g/mol, insbesondere im Bereich von 60 bis 150. Beispiele sind Ethylenglykol, Propylenglykol, Diethylenglykol, Dipropylenglykol, Polyethlenglykol mit einem Molekulargewicht kleiner 1000, Polypropylenglykol mit einem Molekulargewicht kleiner 1000 und/oder Butandiol-1,4. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Isocyanate.

Als Katalysatoren für die Herstellung der erfindungsgemäßen Polyurethanschaumstoffe können die üblichen und bekannten Polyurethanbildungskatalysatoren eingesetzt werden. Beispielsweise organische Zinnverbindungen, wie Zinndiacetat, Zinndioctoat, Dialkylzinndilaurat und/oder stark basische Amine wie Triethylamin, Pentamethyldiethylentriamin, Tetramethyldiaminoethylether, 1,2-Dimethylimidazol, Dimethylcyclohexylamin, Dimethylbenzylamin oder vorzugsweise Triethylendiamin. Die Katalysatoren werden vorzugsweise in einer Menge von 0,01 bis 5 Gew.-%, vorzugsweise 0,05 bis 2 Gew.-%, bezogen auf das Gewicht der Isocyanate, eingesetzt.

Als Treibmittel zur Herstellung der Polyurethanschaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlenwasserstoffe, wie n-, iso- oder Cyclopentan, oder halogenierte Kohlenwasserstoffe, wie Tetrafluorethan, Pentafluorpropan, Heptafluorpropan, Pentafluorbutan, Hexafluorbutan, Dichlor-monofluorethan oder Acetale wie z.B. Methylal eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%, bezogen auf das Gewicht der Verbindungen mit mindestens zwei aktiven Wasserstoffatomen.

Als Hilfsmittel und/oder Zusatzstoffe können beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteriostatisch wirkende Substanzen eingesetzt werden.

Bei der Herstellung der erfindungsgemäßen Polyurethanschaumstoffe werden die Polyisocyanate und die Verbindungen mit mindestens zwei mit Isocyanatgruppen reaktiven Wasserstoffatomen vorzugsweise in einer solchen Menge zur Reaktion gebracht, dass das Äquivalenzverhältnis von Isocyanatgruppen zur Summe der aktiven Wasserstoffatome 0,7 bis 1,8:1, vorzugsweise 0,7 bis 1,2:1 beträgt.

Die Herstellung der Polyurethanschaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und miteinander verschäumt werden. Die Komponenten werden vorzugsweise bei einer Temperatur im Bereich zwischen 15 bis 90°C, vorzugsweise 20 bis 60°C und besonders bevorzugt 20 bis 35°C vermischt und in das Formwerkzeug, beziehungsweise auf die Bandstraße gebracht. Die Temperatur im Formwerkzeug liegt zumeist im Bereich zwischen 20 und 110°C, vorzugsweise 30 bis 60°C und besonders bevorzugt 35 bis 55°C.

Bei der direkten Zugabe der Verbindungen (i) oder (ii) bereits bei der Herstellung der Polyurethanschaumstoffe können diese sowohl der Polyolkomponente als auch der Isocyanatkomponente zugegeben werden. Bevorzugt wird (i) oder (ii) der Polyolkomponente zugegeben.

Die Erfindung soll durch nachfolgende Beispiele veranschaulicht werden.

### Beispiele

### Beispiel 1: Herstellung eines Polyurethanschaumstoffs

Zur Herstellung des Polyurethanschaumstoffs wurde die in Tabelle 1 angegebene Schaumformulierung verwendet. Isocyanat- und Polyolkomponente wurden bei einem Index von 100 verschäumt.

**Tabelle 1:**

| Rezeptur des hergestellten Polyurethanschaumstoffs aus Beispiel 1 | |
|---|---|
| Bestandteil | Gew-%. |
| | |
| Lupranol 2040 | 5,0 |
| Lupranol 2047 | 87,0 |
| Lupranol 3402 | 8,0 |
| Lupragen N 201 | 0,15 |
| Lupragen N 206 | 0,1 |
| Tegostab B 8418 | 3,2 |
| Wasser | 3,2 |
| | |
| B620/1 | 75,0 |
| Lupranat M20W | 25,0 |
| Lupranol® 2040, (BASF Aktiengesellschaft), Polyetherol auf Glycerinbasis, OHZ = 28,0 | |
| Lupranol® 2047, (BASF Aktiengesellschaft), Polyetherol auf Glycerinbasis, OHZ = 42,0 | |
| Lupranol® 3402, (BASF Aktiengesellschaft), Polyetherol auf Ethylendiaminbasis, OHZ = 470 | |
| Lupragen® N 201, (BASF Aktiengesellschaft), (33%ige Lösung von DABCO in Dipropylenglykol) | |
| Lupragen® N 206, (BASF Aktiengesellschaft), Bis(dimethylaminoethyl)ether 70 % in Dipropylenglykol | |
| Tegostab B 8418 (Fa. Goldschmidt), Silikonstabilisator B 620/1®, Elastogran, Präpolymer aus Lupranat MI, Lupranat M20W und Lupranol 2030 | |
| Lupranat® M20W, (BASF Aktiengesellschaft), oligomeres MDI | |

Nach der Herstellung wurden die Schaumstoffe in einer Mühle zu Flocken verarbeitet.

### Beispiel 2: Immobilisierung von Polyethylenimin

Die in Beispiel 1 hergestellten Schaumstoffflocken wurden mit 5%igen wässrigen Lupasollösungen 15 Minuten geschüttelt, dabei wurden pro Gramm Schaumstoff 25 ml der Lupasollösungen eingesetzt. Anschließend wurden die Schaumflocken abfiltriert, 16 Stunden bei 100°C getempert und nach dem Tempern mit destilliertem Wasser gewaschen.
a) Lupasol® FG (BASF Aktiengesellschaft, Polyethylenimin mit MG 800 g/mol)
b) Lupasol® PR (BASF Aktiengesellschaft, Polyethylenimin mit MG 2000 g/mol)
c) Lupasol® WF (BASF Aktiengesellschaft, Polyethylenimin mit MG 25000 g/mol)

### Beispiel 3: Immobilisierung von Polyethylenimin

Die in Beispiel 1 hergestellten Schaumstoffflocken wurden in einer 20%igen wässrigen Lupasol® WF Lösung 15 Minuten geschüttelt, dabei wurden pro Gramm Schaumstoff 25 ml der Lösung eingesetzt. Anschließend wurden die Schaumflocken abfiltriert, 16 Stunden bei 100°C getempert und nach dem Tempern mit destilliertem Wasser gewaschen.

### Beispiel 4: Immobilisierung von Polyethylenimin

Die in Beispiel 1 hergestellten Schaumstoffflocken wurden in einer 20%igen acetonischen Lupasol® WF Lösung 15 Minuten geschüttelt, dabei wurden pro Gramm Schaumstoff 25 ml der Lösung eingesetzt. Anschließend wurden die Schaumflocken abfiltriert, 16 Stunden bei 100°C getempert und nach dem Tempern mit destilliertem Wasser gewaschen.

### Beispiel 5: Immobilisierung von Polyethylenimin

Die in Beispiel 1 hergestellten Schaumstoffflocken wurden in einer 20%igen wässrigen Lupasol® P Lösung 15 Minuten geschüttelt, dabei wurden pro Gramm Schaumstoff 25 ml der Lösung eingesetzt. Anschließend wurden die Schaumflocken abfiltriert, 16 Stunden bei 100°C getempert und nach dem Tempern mit destilliertem Wasser gewaschen.
- Lupasol® P: (BASF Aktiengesellschaft, Polyethylenimin mit MG750000 g/mol)

### Beispiel 6: Immobilisierung von Polyethylenimin

Die in Beispiel 1 hergestellten Schaumstoffflocken wurden in einer 10%igen acetonischen Lupasol® WF Lösung 15 Minuten geschüttelt, dabei wurden pro Gramm Schaumstoff 25 ml der Lösung eingesetzt. Anschließend wurden die Schaumflocken abfiltriert, 16 Stunden bei 100°C getempert und nach dem Tempern mit destilliertem Wasser gewaschen.

### Beispiel 7: Immobilisierung von Polyethylenimin

Die in Beispiel 1 hergestellten Schaumstoffflocken wurden in einer 27%igen acetonischen Lupasol® WF Lösung 15 Minuten geschüttelt, dabei wurden pro Gramm Schaumstoff 25 ml der Lösung eingesetzt. Anschließend wurden die Schaumflocken abfiltriert, 16 Stunden bei 100°C getempert und nach dem Tempern mit destilliertem Wasser gewaschen.

### Beispiel 8: Immobilisierung von Polyvinylamin

Die in Beispiel 1 hergestellten Schaumstoffflocken wurden in einer wässrigen Polyvinylaminlösungen (k-Wert = 88,9) 15 Minuten geschüttelt, dabei wurden pro Gramm Schaumstoff 25 ml der Polyvinylaminlösungen eingesetzt. Anschließend wurden die Schaumflocken abfiltriert, 16 Stunden bei 100°C getempert und nach dem Tempern mit destilliertem Wasser gewaschen.
a) Konzentration der Polyvinylaminlösung: 6,5 %
b) Konzentration der Polyvinylaminlösung: 13 %

### Beispiel 9: Immobilisierung von Polyvinylamin

Die in Beispiel 1 hergestellten Schaumstoffflocken wurden in einer wässrigen Polyvinylaminlösungen (k-Wert =162) 15 Minuten geschüttelt, dabei wurden pro Gramm Schaumstoff 25 ml der Polyvinylaminlösungen eingesetzt. Anschließend wurden die Schaumflocken abfiltriert, 16 Stunden bei 100°C getempert und nach dem Tempern mit destilliertem Wasser gewaschen.
a) Konzentration der Polyvinylaminlösung: 2,1 %
b) Konzentration der Polyvinylaminlösung: 4,2 %

### Beispiel 10: Einsatz der Schaumstoffe zur Schwermetallabreicherung

Die Eignung der in Beispiel 2 hergestellten Schaumstoffe zur Schwermetallabreicherung wurde exemplarisch anhand des Kupferbindevermögens quantifiziert, dazu wurden jeweils 2 g Schaumstoff in 100 ml Kupferlösung 2 Stunden geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Folgende Kupferabreicherungen wurden erhalten.

| | |
|---|---|
| Schaumstoff aus Beispiel 2a) | 43,7 mg Cu |
| Schaumstoff aus Beispiel 2b) | 47,0 mg Cu |
| Schaumstoff aus Beispiel 2c) | 60,8 mg Cu |

### Beispiel 11: Einsatz der Schaumstoffe zur Schwermetallabreicherung

Die Eignung der in den Beispielen 3 und 4 hergestellten Schaumstoffe zur Schwermetallabreicherung wurde exemplarisch anhand des Kupferbindevermögens quantifiziert, dazu wurden jeweils 1 g Schaumstoff in 100 ml Kupferlösung 2 Stunden geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Die Ergebnisse sind in Tabelle 2 zusammengefasst.

**Tabelle 2:**

| Vergleich der Kupferabreicherungen der in den Beispielen 3 und 4 hergestellten Schaumstoffe | | |
|---|---|---|
| | Schaumstoff aus Beispiel 3 | Schaumstoff aus Beispiel 4 |
| Kupferangebot: | gebundenes Kupfer: | gebundenes Kupfer: |
| 49 mg/g_{Schaum} | 45,5 mg/g_{Schaum} | 43,8 mg/g_{Schaum} |
| 101 mg/g_{Schaum} | 73,7 mg/g_{Schaum} | 70,1 mg/g_{Schaum} |
| 201 mg/g_{Schaum} | 84,3 mg/g_{Schaum} | 146,2 mg/g_{Schaum} |
| 299 Mg/g_{Schaum} | 94,6 mg/g_{Schaum} | 178,4 Mg/g_{Schaum} |

### Beispiel 12: Einsatz der Schaumstoffe zur Schwermetallabreicherung

Die Eignung der in den Beispielen 3 und 5 hergestellten Schaumstoffe zur Schwermetallabreicherung wurde exemplarisch anhand des Kupferbindevermögens quantifiziert, dazu wurden jeweils 1 g Schaumstoff in 100 ml Kupferlösung 2 Stunden geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Die Ergebnisse sind in Tabelle 3 zusammengefasst.

**Tabelle 3:**

| Vergleich der Kupferabreicherungen der in den Beispielen 3 und 5 hergestellten Schaumstoffe | | |
|---|---|---|
| | Schaumstoff aus Beispiel 3 | Schaumstoff aus Beispiel 5 |
| Kupferangebot: | gebundenes Kupfer: | gebundenes Kupfer: |
| 49 mg/g_{Schaum} | 45,5 mg/g_{Schaum} | 44,0 mg/g_{Schaum} |
| 101 mg/g_{Schaum} | 73,7 mg/g_{Schaum} | 82,0 mg/g_{Schaum} |
| 201 mg/g_{Schaum} | 84,3 mg/g_{Schaum} | 129,4 mg/g_{Schaum} |
| 299 mg/g_{Schaum} | 94,6 mg/g_{Schaum} | 132,8 mg/g_{Schaum} |
| 399 mg/g_{Schaum} | 94,6 mg/g_{Schaum} | 136,4 mg/g_{Schaum} |

### Beispiel 13: Einsatz der Schaumstoffe zur Schwermetallabreicherung

Die Eignung der in den Beispielen 4, 6 und 7 hergestellten Schaumstoffe zur Schwermetallabreicherung wurde exemplarisch anhand des Kupferbindevermögens quantifiziert, dazu wurden jeweils 1 g Schaumstoff in 100 ml Kupferlösung 2 Stunden geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Die Ergebnisse sind in Tabelle 4 zusammengefasst.

**Tabelle 4:**

| Vergleich der Kupferabreicherungen der in den Beispielen 3 und 5 hergestellten Schaumstoffe | | | |
|---|---|---|---|
| Konzentration der Lösung | Schaumstoff aus Beispiel 6 | Schaumstoff aus Beispiel 4 | Schaumstoff aus Beispiel 7 |
| Kupferangebot: | gebundenes Kupfer: | gebundenes Kupfer: | gebundenes Kupfer: |
| 49 mg/g_{Schaum} | 33,5 mg/g_{Schaum} | 43,8 mg/g_{Schaum} | 44,0 mg/g_{Schaum} |
| 101 mg/g_{Schaum} | 55,6 mg/g_{Schaum} | 70,1 mg/g_{Schaum} | 71,5 mg/g_{Schaum} |
| 201 mg/g_{Schaum} | 76,4 mg/g_{Schaum} | 146,2 mg/g_{Schaum} | 142,3 mg/g_{Schaum} |
| 299 mg/g_{Schaum} | | 178,4 mg/g_{Schaum} | 211,4 mg/g_{Schaum} |
| 399 mg/g_{Schaum} | | | 239,0 mg/g_{Schaum} |
| 499 mg/g_{Schaum} | | | 258,0 mg/g_{Schaum} |

### Beispiel 14: Einsatz der Schaumstoffe zur Schwermetallabreicherung

Zur Bestimmung der Kinetik der Schwermetallabreicherung, die exemplarisch anhand der Kupferabreicherung quantifiziert wurde, wurden 0,1 g des in Beispiel 4 hergestellten Schaumstoffs in 100 ml einer 250 ppm Kupferlösung variable Zeiten geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Die Ergebnisse sind in Tabelle 5 zusammengefasst.

**Tabelle 5:**

| Kinetik der Kupferabreicherungen mit dem in Beispiel 4 hergestellten Schaumstoff | |
|---|---|
| Kontaktzeit Kontaktzeit | Kupferkonzentration der Lösung |
| Ausgangskonzentration | 245 ppm |
| t = 5 min. | 203 ppm |
| t = 15 min. | 195 ppm |
| t = 30 min. | 184 ppm |
| t = 60 min. | 172 ppm |
| t = 240 min. | 138 ppm |
| t = 1440 min. | 137 ppm |

### Beispiel 15: Einsatz der Schaumstoffe zur Schwermetallabreicherung

In Beispiel 7 hergestellte Schaumflocken wurden zur Abreicherung verschiedener Schwermetalle eingesetzt. Dazu wurden jeweils 1 g Schaumflocken in 100 ml einer 3000 ppm Schwermetallhaltigen Lösung zwei Stunden geschüttelt. Die Schwermetallkonzentrationen der Ausgangslösung, sowie der Lösungen nach dem Kontakt mit den Schaumflocken wurden mittels Atomadsorptionsspektroskopie bestimmt. Die Ergebnisse sind in Tabelle 6 zusammengefasst.

**Tabelle 6:**

| Abreicherung verschiedener Schwermetalle durch den in Beispiel 7 hergestellten Schaumstoff | | | |
|---|---|---|---|
| Schwermetall | Ausgangskonzentration | in der Lösung verblieben | abgereichtert mg/g_{Schaum} |
| Nickel (II) | 3300 mg/l | 2500 mg/l | 80,0 mg/g_{Schaum} |
| Eisen (III) | 2800 mg/l | 2500 mg/l | 30,0 mg/g_{Schaum} |
| Blei (II) | 2900 mg/l | 185 mg/l | 271,5 mg/g_{Schaum} |
| Kupfer (II) | 2990 mg/l | 876 mg/l | 211,4 mg/g_{Schaum} |
| Zink (II) | 2800 mg/l | 1600 mg/l | 120,0 mg/g_{Schaum} |
| Quecksilber (II) | 3000 mg/l | 34 mg/l | 296,6 mg/g_{Schaum} |

### Beispiel 16: Regenerierung der Schaumstoffe

15 g, nach Beispiel 5 hergestellte, Schaumflocken wurden in 375 ml einer 2000 ppm Kupferchloridlösung 30 Minuten geschüttelt. Anschließend wurde die überstehende Kupferlösung abfiltriert, die Schaumflocken wurden mit 0,5 n Salzsäure regeneriert. Durch erneutes Schütteln in 375 ml einer 2000 ppm Kupferchloridlösung (30 Minuten) wurden die Schaumflocken wieder beladen. Die Ergebnisse sind in Tabelle 7 zusammengefasst.

**Tabelle 7:**

| Abgereicherte Kupferionen | |
|---|---|
| Durchgang | Abgereicherte Kupferionen mg/g_{Schaum} |
| 1 | 32,3 |
| 2 | 22,8 |
| 3 | 23,4 |
| 4 | 22,7 |
| 5 | 22,9 |
| 6 | 22,2 |
| 7 | 22,4 |
| 8 | 23,2 |
| 9 | 23,6 |
| 10 | 24,7 |
| 11 | 22,8 |
| 12 | 23,2 |
| 13 | 23,4 |
| 14 | 23,7 |
| 15 | 24,3 |
| 16 | 23,7 |
| 17 | 22,5 |
| 18 | 22,8 |
| 19 | 23,4 |

### Beispiel 17: Einsatz der Schaumstoffe zur Papierabwasserreinigung

Nach den Beispielen 7 und 9 b hergestellte Schaumstoffflocken wurden zur Reinigung eines Originalabwassers einer Papierfabrik eingesetzt. Dazu wurden variable Mengen des Schaumstoffs in 50 ml des Abwassers 30 Minuten geschüttelt. Die Qualität der Reinigung wurde photometrisch über die Reduktion der Extinktion bei einer Wellenlänge von 297 nm bestimmt. Die Ergebnisse sind in Tabelle 8 zusammengefasst.

**Tabelle 8:**

| Reduktion der Extinktion eines Abwassers der Papierherstellung | | |
|---|---|---|
| Schaumstoff, g/50 ml | Extinktion (1=297 nm), % Schaumstoff aus Beispiel 7 | Extinktion (1=297 nm), % Schaumstoff aus Beispiel 9b |
| Ausgangslösung | 100 | 100 |
| 0,05 g | 85,4 | 95,3 |
| 0,1g | 55,5 | 92,0 |
| 0,2 g | 26,3 | 79,9 |
| 0,3 g | 23,9 | 63,3 |
| 0,5 g | 27,2 | 15,0 |

### Beispiel 18: Einsatz der Schaumstoffe zur Farbstoffabreicherung

Im Abwasser einer Färberei befinden sich hauptsächlich hydrolisierte Farbstoffe, daher wurde der Reaktivfarbstoff Remazol® Rot 198 (Fa. Dystar) vorab in 0.01N Natronlauge gelöst und anschließend im Wasserbad bei 60 bis 70°C ca. 3 Stunden hydrolisiert.

Zur Abreicherung des Farbstoffs wurden anschließend 1 g Schaumstoffflocken aus Beispiel 7 mit 50 ml Farbstofflösung 5 Stunden geschüttelt, die Farbstoffkonzentration der Lösung wurde photometrisch am Absorptionsmaximum bestimmt. Die Kalibrierung erfolgte mit hydrolisierten Farbstoffen bei gleicher Probenbehandlung. Die Ergebnisse der Remzol Rot 198 Abreicherung bei verschiedenen pH-Werten sind in Tabelle 9 zusammengefasst.

**Tabelle 9:**

| Reduktion der Konzentration an dem Reaktivfarbstoff Remazol Rot 198 | | | |
|---|---|---|---|
| Farbstoffangebot mg/g_{Schaum} | abgereicherter Farbstoff mg/gS_{chaum} | | |
| | pH=10 | pH = 7 | pH=5 |
| 25 | 22 | 22 | 23 |
| 50 | 47 | 47 | 48 |
| 125 | 115 | 115 | 119 |
| 200 | 170 | 171 | 185 |

### Beispiel 19: Einsatz der Schaumstoffe zur Farbstoffabreicherung

Im Abwasser einer Färberei befinden sich hauptsächlich hydrolisierte Farbstoffe, daher wurde der Reaktivfarbstoff Procion Blue MX-R (Fluka, CAS: 13324-20-4) vorab in 0,01N Natronlauge gelöst und anschließend im Wasserbad bei 60 bis 70°C ca. 3 Stunden hydrolisiert.

Zur Abreicherung des Farbstoffs wurden anschließend 1 g Schaumstoffflocken aus Beispiel 7 mit 50 ml Farbstofflösung 6 Stunden geschüttelt, die Farbstoffkonzentration der Lösung wurde photometrisch am Absorptionsmaximum bestimmt. Die Kalibrierung erfolgte mit hydrolisierten Farbstoffen bei gleicher Probenbehandlung. Die Ergebnisse sind in Tabelle 10 zusammengefasst.

**Tabelle 10:**

| Reduktion der Konzentration an dem Reaktivfarbstoff Procion Blue MX-R | |
|---|---|
| Farbstoffangebot mg/g_{Schaum} | abgereicherter Farbstoff mg/g_{Schaum} |
| 25 | 25 |
| 50 | 50 |
| 120 | 99 |
| 200 | 198 |

### Beispiel 20: Einsatz der Schaumstoffe zur Schwermetallabreicherung

Die Eignung der in den Beispielen 8 und 9 hergestellten Schaumstoffe zur Schwermetallabreicherung wurde anhand ihres Kupferbindevermögens quantifiziert. Dazu wurde jeweils 1 g Schaumstoff in 100 ml Kupferlösung 2 Stunden geschüttelt. Die Kupferkonzentrationen der Ausgangslösung, sowie der Lösungen nach dem Kontakt mit den Schaumflocken wurden photometrisch mit Küvettentests der Fa. Dr. Lange bestimmt. Die Ergebnisse sind in Tabelle 11 zusammengefasst.

**Tabelle 11:**

| Vergleich der Kupferabreicherungen durch die in den Beispielen 8 und 9 hergestellten Schaumstoffe | | | | |
|---|---|---|---|---|
| Kupferangebot | gebundenes Kupfer | | | |
| | Beispiel 8a | Beispiel 8b | Beispiel 9a | Beispiel 9b |
| 50 mg/g_{Schaum} | 27,9 mg/g_{Schaum} | 28,5 mg/g_{Schaum} | | |
| 99 mg/g_{Schaum} | 35,2 mg/g_{Schaum} | 62,1 mg/g_{Schaum} | 27,5 mg/g_{Schaum} | 59,6 Mg/gS_{chaum} |
| 199 mg/g_{Schaum} | 46,1 mg/g_{Schaum} | 102,3 mg/g_{Schaum} | 36,0 mg/g_{Schaum} | 74,3 mg/gS_{chaum} |
| 299 mg/g_{Schaum} | 48,7 mg/g_{Schaum} | 113,4 mg/g_{Schaum} | 47,0 mg/g_{Schaum} | 85,4 mg/gS_{chaum} |
| 401 mg/g_{Schaum} | | 138,0 mg/g_{Schaum} | 52,0 mg/g_{Schaum} | 100,1 mg/g_{Schaum} |
| 499 mg/g_{Schaum} | | 144,1 mg/g_{Schaum} | 53,0 mg/g_{Schaum} | 101,0 mg/g_{Schaum} |

Die Beispiele 21 bis 31 betreffen die Verwendung der erfindungsgemäßen Schaumstoffe zur Adsorption von Geruchsstoffen.

Zu der erfindungsgemäßen Adsorption von Geruchsstoffen wurden verschiedene, ggf. modifizierte Polyurethanschaumstoffe hergestellt und eingesetzt. Die Geruchsstoffe wurden durch saure Geruchsstoffe, wie beispielsweise Essigsäure simuliert. Die Adsorption der Modellverbindungen erfolgte in einem 560 1 fassenden Klimaschrank bei 25°C. Innerhalb des Klimaschranks wurden Konzentrationen von ca. 140 bis 160 ppm V/V (V/V = Volumen bezogene Konzentrationen) an Modellsubstanz eingestellt. Nach der Schaumstoffzugabe wurde die Abnahme der Konzentration mittels Gaschromatographie bestimmt. Bei den Lupranolen handelt es sich um verschiedene Polyetherole, die mit unterschiedlichen Startern hergestellt wurden und sich in der Ethylenoxid/Propylenoxid-Menge unterscheiden, bei den Lupranaten handelt es sich um verschieden Produkte auf MDI-Basis.

### Beispiel 21

Herstellung eines aromatischen Polyurethan-Weichschaumstoffes, nachfolgend bezeichnet als Vergleichssystem 1, durch intensives Vermischen von 105,2 g A-Komponente mit 100 g B-Komponente (Index 100) mit Hilfe eines Rührers bei einer Drehzahl von 1250 U/min und Überführen des aufschäumenden Gemisches in ein Kunststoffgefäß mit 5 1 Volumen, wobei sich die Komponenten folgendermaßen aufbauen:

### Polyol-Komponente:

| | |
|---|---|
| 97,0 Teile | Lupranol 2040® (BASF Aktiengesellschaft) |
| 3,0 Teile | Lupranol 2047® (BASF Aktiengesellschaft) |
| 3,3 Teile | Wasser |
| 0,6 Teile | Lupragen N 107® (BASF Aktiengesellschaft) |
| 0,8 Teile | Aminopropylimindazol |
| 0,5 Teile | Tegostab B 8631® (Goldschmidt) |

### B-Komponente:

| | |
|---|---|
| 42 Teile | Lupranat M 20 W® |
| 11 Teile | Lupranat MES® |
| 47 Teile | Lupranat MI® |

### Beispiel 22

Herstellung eines aromatischen Polyurethan-Weichschaumstoffes, nachfolgend bezeichnet als Vergleichssystem 2, durch intensives Vermischen von 115,24 g A-Komponente mit 100 g B-Komponente (Index 100) mit Hilfe eines Rührers bei einer Drehzahl von 1250 U/min und Überführen des aufschäumenden Gemisches in ein Kunststoffgefäß mit 5 1 Volumen, wobei sich die Komponenten folgendermaßen aufbauen:

### Polyol-Komponente:

| | |
|---|---|
| 95 Teile | Lupranol 2045® (BASF Aktiengesellschaft) |
| 5 Teile | Lupranol 2047® (BASF Aktiengesellschaft) |
| 10,71 Teile | Lupranol 2030® (BASF Aktiengesellschaft) |
| 3,45 Teile | Wasser |
| 0,48 Teile | Lupragen N 201® (BASF Aktiengesellschaft) |
| 0,13 Teile | Lupragen N 206® (BASF Aktiengesellschaft) |
| 0,37 Teile | Tetramethylhexamethylendiamin (BASF Aktiengesellschaft) |
| 0,1 | Teile Tegostab B 8680® (Goldschmidt) |

### B-Komponente:

| | |
|---|---|
| 75 Teile | Lupranat M 20 W® |
| 25 Teile | Lupranat MP 111® |

### Beispiel 23

Herstellung eines aliphatischen Polyurethan-Weichschaumstoffes, nachfolgend bezeichnet als Vergleichssystem 3, durch intensives Vermischen von 110 g A-Komponente mit 100 g B-Komponente (Index 110) mit Hilfe eines Rührers bei einer Drehzahl von 1250 U/min und Überführen des aufschäumenden Gemisches in ein Kunststoffgefäß mit 5 1 Volumen, wobei sich die Komponenten folgendermaßen aufbauen:

### Polyol-Komponente:

| | |
|---|---|
| 56 Teile | Lupranol 2042®(BASF Aktiengesellschaft) |
| 35 Teile | Lupranol 2045® (BASF Aktiengesellschaft) |
| 2 Teile | Wasser |
| 3 Teile | Lupragen N 209® (BASF Aktiengesellschaft) |
| 2 Teile | Lupragen N 201® (BASF Aktiengesellschaft) |
| 1 Teil | Lupragen N 206® (BASF Aktiengesellschaft) |
| 1 Teil | Kosmos 29® (Goldschmidt) |
| 1 Teil | Tegostab B 8680® (BASF Aktiengesellschaft) |

### B-Komponente:

100 Teile Basonat HI 100® (BASF Aktiengesellschaft)

### Beispiel 24

Zur Modifizierung der Polyurethanschaumstoffe der Beispiele 1 bis 3 wurden die Schaumstoffe mit einer ethanolischen KOH-Lösung (KOH-Gehalt = 5 %) getränkt und anschließend bei 100°C getempert.

### Beispiel 25

Zur Modifizierung der Polyurethanschaumstoffe der Beispiele 1 bis 3 wurden die Schaumstoffe mit einer acetonischen 5%igen Polyethyleniminlösung getränkt und anschließend bei 100°C getempert.

### Beispiel 26

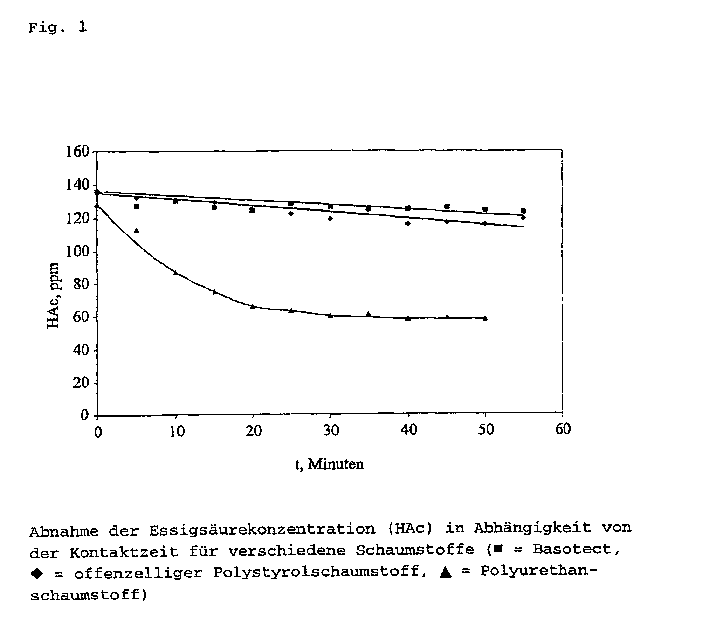

Aus dem in Beispiel 2) hergestellten Schaumstoff wurde eine Platte der Maße 20*30*1 cm3 herausgeschnitten. Diese wurde anschließend in einen 560 1 fassenden Klimaschrank eingebracht, in dem zuvor eine Essigsäurekonzentration von ca. 140 bis 160 ppm V/V eingestellt wurde (V/V = Volumen bezogene Konzentrationen). Die Abnahme der Essigsäurekonzentrationen wurde alle fünf Minuten mit einem Gaschromatograph verfolgt und ist in Figur 1 graphisch dargestellt. Zum Vergleich sind die durch Basotect® (Melamin-Formaldehydschaumstoff der BASF Aktiengesellschaft) und einen offenzelligen Polystyrolschaumstoff erhaltenen.Essigsäurekonzentrationen in Abhängigkeit von der Zeit gezeigt.

### Beispiel 27 .

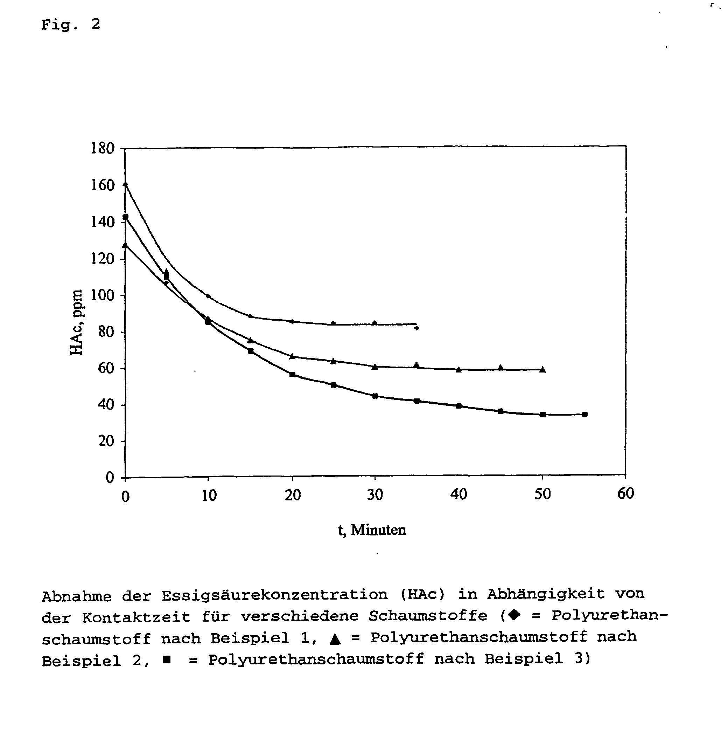

Aus den in den Beispielen 1), 2) und 3) hergestellten Schaumstoffen wurden jeweils Platten der Maße 20*30*1 cm3 herausgeschnitten. Diese wurden anschließend in einen 560 1 fassenden Klimaschrank eingebracht, in dem zuvor eine Essigsäurekonzentration von ca. 140 bis 160 ppm V/V eingestellt wurde (V/V = Volumen bezogene Konzentrationen). Die Abnahme der Essigsäurekonzentrationen wurde alle fünf Minuten mit einem Gaschromatograph verfolgt und ist in Figur 2 graphisch dargestellt.

### Beispiel 28

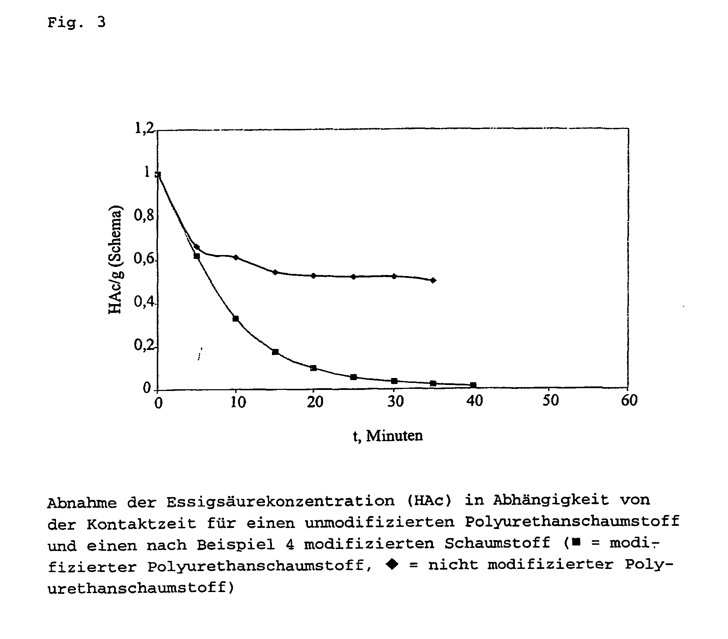

Aus den in Beispiel 1) hergestellten aromatischen Polyurethanschaumstoff wurden zwei Platten der Maße 20*30*1 cm3 herausgeschnitten. Eine dieser Platten wurde zusätzlich wie in Beispiel 4) beschrieben behandelt. Die Ergebnisse in Figur 3 zeigen vergleichend die gaschromatographisch verfolgte Abnahme der Essigsäurekonzentration für den modifizierten und den unmodifizierten Schaumstoff. Für den Zeitpunkt t = 0 wurde die Essigsäurekonzentration auf 100 % gesetzt.

### Beispiel 29

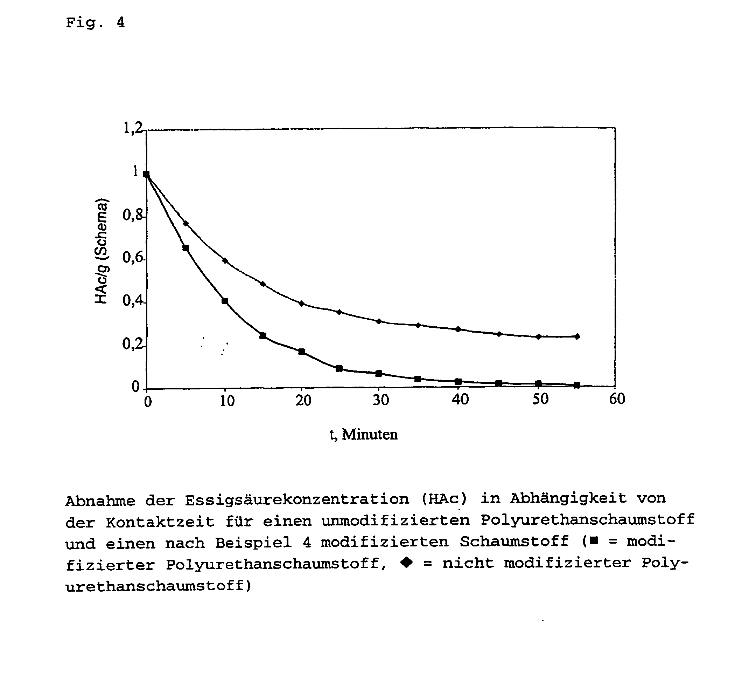

Aus den in Beispiel 3) hergestellten aliphatischen Polyurethanschaumstoff wurden zwei Platten der Maße 20*30*1 cm3 herausgeschnitten. Eine dieser Platten wurde zusätzlich wie in Beispiel 4) beschrieben behandelt. Die Ergebnisse in Figur 4 zeigen vergleichend die gaschromatographisch verfolgte Abnahme der Essigsäurekonzentration für den modifizierten und den unmodifizierten Schaumstoff.

### Beispiel 30

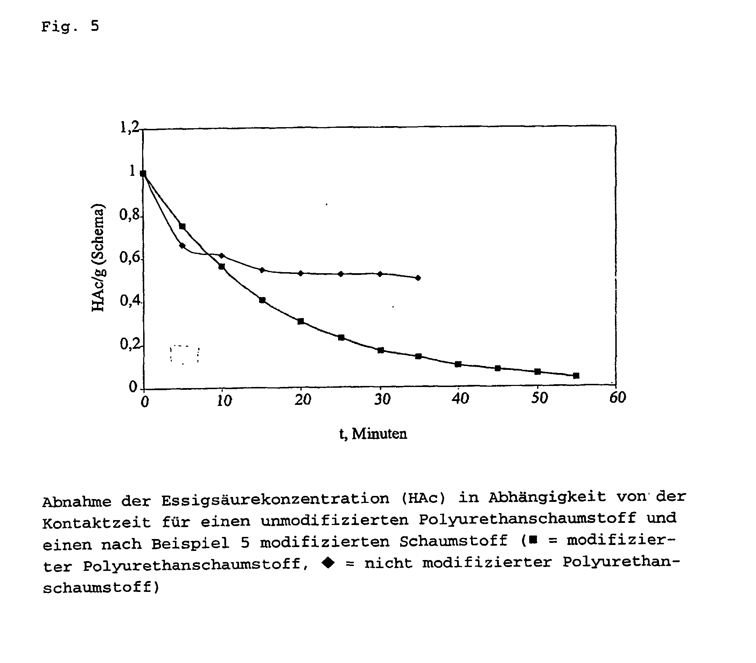

Aus den in Beispiel 1) hergestellten aromatischen Polyurethanschaumstoff wurden zwei Platten der Maße 20*30*1 cm3 herausgeschnitten. Eine dieser Platten wurde zusätzlich wie in Beispiel 5) beschrieben behandelt. Die Ergebnisse in Figur 5 zeigen vergleichend die gaschromatographisch verfolgte Abnahme der Essigsäurekonzentration für den modifizierten und den unmodifizierten Schaumstoff.

### Beispiel 31

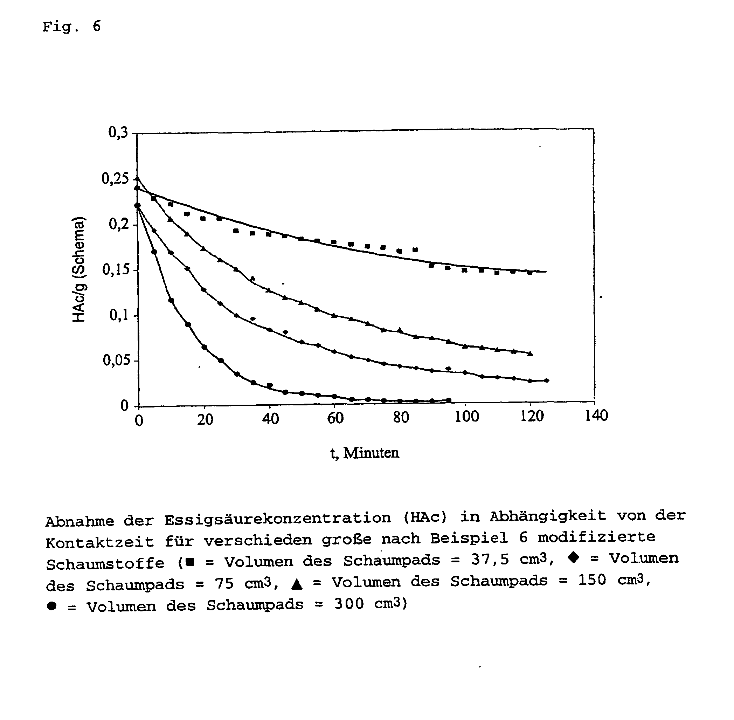

Aus den in Beispiel 1) hergestellten aromatischen Polyurethanschaumstoff wurden Platten verschiedener Maße herausgeschnitten, die Platten wurden wie in Beispiel 5) beschrieben behandelt. Die Ergebnisse in Figur 6 zeigen vergleichend die gaschromatographisch verfolgte Abnahme der Essigsäurekonzentration für die modifizierten Schaumstoffpads unterschiedlicher Dimension.

## Patentansprüche

1. Polyurethanschaumstoffe, enthaltend
(i) Ethylenimin, Polyethylenimin, Polyvinylamin, Polyvinylamin-Copolymere, carboxymethylierte Polyethylenimine, phosphonomethylierte Polyethylenimine, quarternisierte Polyethylenimine und/oder dithiocarbamatisierte Polyethylenimine oder
(ii)Alkali- und/oder Erdalkalihydroxide oder
ein Gemisch aus (i) und (ii).

2. Polyurethanschaumstoffe gemäß Anspruch 1, enthaltend (i) kovalent gebunden an das Polymere des Schaumstoffes

3. Polyurethanschaumstoffe nach Anspruch 1, enthaltend als Alkali- und/oder Erdalkalihydroxide (ii) Natriumhydroxid und/oder Kaliumhydroxid.

4. Polyurethanschaumstoffe nach einem der Ansprüche 1 bis 3, enthaltend 0,1 bis 80 Gew.-% an (i) und/oder (ii), bezogen auf das Gewicht des Schaumstoffs.

5. Verwendung von Polyurethanschaumstoffen gemäß einem der Ansprüche 1 bis 4 zur Adsorption von Verbindungen, bevorzugt von Geruchsstoffen, Schwermetallionen und/oder Farbstoffen.

6. Verwendung von Polyurethanschaumstoffen gemäß einem der Ansprüche 1 bis 4 zur Herstellung von Formkörpern.

7. Verfahren zur Herstellung von Polyurethanschaumstoffen durch Umsetzung von Polyisocyanaten mit Verbindungen mit mindestens zwei mit Isocyanaten reaktiven Wasserstoffatomen, **dadurch gekennzeichnet, dass** man
(i) Ethylenimin, Polyethylenimin, Polyvinylamin, Polyvinylamin-Copolymere, carboxymethylierte Polyethylenimine, phosphonomethylierte Polyethylenimine, quarternisierte Polyethylenimine und/oder dithiocarbamatisierte Polyethylenimine oder
(ii) Alkali- und/oder Erdalkalihydroxide oder ein Gemisch aus (i) und (ii)
auf die Oberfläche des Schaumstoffs aufbringt.

8. Verfahren nach Anspruch 7, **dadurch gekennzeichnet, daß** man die Umsetzung in Gegenwart von Verbindungen (i) und/oder (ii) durchführt.

9. Verfahren nach Anspruch 7, **dadurch gekennzeichnet, daß** man den Polyurethanschaumstoff nach seiner Herstellung mit den Verbindungen (i) oder Lösungen von den Verbindungen (ii) tränkt.

## Claims

1. A polyurethane foam comprising
(i) ethylenimine, polyethylenimine, polyvinylamine, polyvinylamine copolymers, carboxymethylated polyethylenimines, phosphonomethylated polyethylenimines, quarternized polyethylenimines and/or dithiocarbamatized polyethylenimines or
(ii)alkali metal hydroxides and/or alkaline earth metal hydroxides or
a mixture of (i) and (ii).

2. The polyurethane foam according to claim 1 comprising (i) which is covalently bound to the polymer of the foam.

3. The polyurethane foam according to claim 1 comprising sodium hydroxide and/or potassium hydroxide as alkali metal hydroxides and/or alkaline earth metal hydroxides (ii).

4. The polyurethane foam according to any of claims 1 to 3 comprising from 0.1 to 80% by weight of (i) and/or (ii), based on the weight of the foam.

5. The use of polyurethane foams according to any of claims 1 to 4 for the adsorption of compounds, preferably odorous substances, heavy metal ions and/or dyes.

6. The use of polyurethane foams according to any of claims 1 to 4 for producing shaped bodies.

7. A process for producing polyurethane foams by reacting polyisocyanates with compounds having at least two hydrogen atoms which are reactive toward isocyanates, which comprises applying.
(i) ethylenimine, polyethylenimine, polyvinylamine, polyvinylamine copolymers, carboxymethylated polyethylenimines, phosphonomethylated polyethyleneimines, quarternized polyethylenimines and/or dithiocarbamatized polyethylenimines or
(ii) alkali metal hydroxides and/or alkaline earth metal hydroxides or a mixture of (i) and (ii)
to the surface of the foam.

8. The process according to claim 7 wherein the reaction is carried out in the presence of compounds (i) and/or (ii).

9. The process according to claim 7 wherein the polyurethane foam is impregnated with the compounds (i) or solutions of the compounds (ii) after it has been produced.

## Revendications

1. Mousses de polyuréthanne contenant
(i) de l'éthylèneimine, de la polyéthylèneimine, de la polyvinylamine, des copolymères de polyvinylamine, des polyéthylèneimines carboxyméthylées, des polyéthylèneimines phosphonométhylées, des polyéthylèneimines quaternisées et/ou des polyéthylèneimines dithiocarbamatées, ou
(ii) des hydroxydes de métal alcalin et/ou de métal alcalino-terreux, ou
un mélange de (i) et de (ii).

2. Mousses de polyuréthanne suivant la revendication 1, contenant (i) fixés de manière covalente sur le polymère de la mousse.

3. Mousses de polyuréthanne suivant la revendication 1, contenant, comme hydroxydes de métal alcalin et/ou de métal alcalino-terreux (ii), de l'hydroxyde de sodium et/ou de l'hydroxyde de potassium.

4. Mousses de polyuréthanne suivant l'une des revendications 1 à 3, contenant 0,1 à 80 % en poids de (i) et/ou de (ii), par rapport au poids de la mousse.

5. Utilisation de mousses de polyuréthanne suivant l'une des revendications 1 à 4, pour l'adsorption de composés, de préférence de matières odorantes, d'ions de métal lourd et/ou de colorants.

6. Utilisation de mousses de polyuréthanne suivant l'une des revendications 1 à 4, pour la fabrication de corps façonnés.

7. Procédé de préparation de mousses de polyuréthanne, par réaction de polyisocyanates avec des composés comportant au moins deux atomes d'hydrogène réactifs avec des isocyanates, **caractérisé en ce qu'**on applique à la surface de la mousse
(i) de l'éthylèneimine, de la polyéthylèneimine, de la polyvinylamine, des copolymères de polyvinylamine, des polyéthylèneimines carboxyméthylées, des polyéthylèneimines phosphonométhylées, des polyéthylèneimines quaternisées et/ou des polyéthylèneimines dithiocarbamatées, ou
(ii) des hydroxydes de métal alcalin et/ou de métal alcalino-terreux,
ou un mélange de (i) et de (ii).

8. Procédé suivant la revendication 7, **caractérisé en ce qu'**on effectue la réaction en présence de composés (i) et/ou (ii).

9. Procédé suivant la revendication 7, **caractérisé en ce qu'**on imprègne la mousse de polyuréthanne, après sa fabrication, avec les composés (i) ou des solutions des composés (ii).
